# EUROPÄISCHE PATENTANMELDUNG

(11) **EP 1 884 351 A1**
(43) Veröffentlichungstag der Anmeldung: **06.02.2008**
(21) Anmeldenummer: 07109775.2
(22) Anmeldetag: 07.06.2007
(51) Int. Cl.: B29D 30/38, B29D 30/46

(54) **Verfahren zur Herstellung einer Materialbahn**

(30) Priorität: 04.08.2006 DE 102006036507
(71) Anmelder: Continental Aktiengesellschaft, 30165 Hannover (DE)
(72) Erfinder: Böhm, Mario, 30559 Hannover (DE); Dietrich, Wolfgang, 30455 Hannover (DE); Hanke, Andreas, 30449 Hannover (DE); Janutta, Reinhard, 33415 Verl (DE); Linne, Stefan, 30900 Wedemark (DE)

(57) **Zusammenfassung**

Die Erfindung betrifft ein Verfahren und eine Vorrichtung zur Herstellung einer Materialbahn (13) aus einem Basismaterial mit eingebetteten Zugträgern, wobei die Zugträger zur Längsachse der Materialbahn (13) einen Winkel γ bilden, der von Null verschieden ist. Die Materialbahn (13) wird durch folgende Arbeitsschritte hergestellt, nämlich spiralförmiges Aufwickeln mindestens eines Rohmaterialstreifens (2) auf einer Aufwickeleinheit (1) unter einem Winkel α, festes Verbinden der aneinander stoßenden oder überlappenden Ränder (6,7) des Rohmaterialstreifens (2) miteinander durch eine Verbindungseinheit (8), so dass ein geschlossener rohrförmiger Rohling (9) entsteht und Abtrennen der Materialbahn (13) durch eine Schneideinheit (11) vom Rohling (9) derart, dass die Zugträger einen Winkel γ zur Längsachse der Materialbahn (13) bilden. Der Erfindung liegt die Aufgabe zugrunde, die Materialbahn in einem kontinuierlichen Verfahren herzustellen. Diese Aufgabe wird dadurch gelöst, dass das Abtrennen der Materialbahn (13) vom Rohling (9) in einem gleichläufigen Schneidvorgang erfolgt, bei dem die Schneidrichtung und Aufwickelrichtung des Rohmaterialstreifens (2) gleich sind.

## Beschreibung

Die Erfindung betrifft ein Verfahren zur Herstellung einer Materialbahn aus einem Basismaterial mit in das Basismaterial eingebetteten Zugträgern, wobei die Zugträger zur Längsachse der Materialbahn einen Winkel γ bilden, der von Null verschieden ist, welches mindestens folgende Verfahrensschritte aufweist, nämlich
- spiralförmiges Aufwickeln mindestens eines Rohmaterialstreifens aus einem Basismaterial mit eingebetteten, parallel zur Längsachse des Rohmaterialstreifens ausgerichteten Zugträgern auf einer Aufwickeleinheit unter einem Winkel α des Rohmaterialstreifens zur Längsachse der Aufwickeleinheit zu einem Hohlkörper derart, dass die Ränder des Rohmaterialstreifens auf der Aufwickeleinheit spaltlos aneinander stoßen oder überlappen,
- festes Verbinden der aneinander stoßenden oder überlappenden Ränder miteinander durch eine Verbindungseinheit, so dass ein geschlossener rohrförmiger Rohling entsteht, bei dem die Zugträger spiralförmig unter dem Winkel α in der Wandung des Rohlings angeordnet sind,
- Abtrennen mindestens einer Materialbahn durch eine Schneideinheit vom Rohling derart, dass die Zugträger einen Winkel γ zur Längsachse der Materialbahn bilden.

Die Erfindung betrifft weiterhin eine Vorrichtung zur Durchführung des Verfahrens zur Herstellung einer Materialbahn mit einer Aufwickeleinheit, einer Verbindungseinheit und einer Schneideinheit, wobei mindestens ein Rohmaterialstreifen aus einem Basismaterial mit eingebetteten, parallel zur Längsachse des Rohmaterialstreifens ausgerichteten Zugträgern auf einer Aufwickeleinheit unter einem Winkel α des Rohmaterialstreifens zur Längsachse der Aufwickeleinheit derart aufwickelbar ist, dass die Ränder des Rohmaterialstreifens auf der Aufwickeleinheit spaltlos aneinander stoßen oder überlappen und der Rohmaterialstreifen durch die Verbindungseinheit zu einem als geschlossener rohrförmiger Hohlkörper ausgebildeten Rohling verbindbar ist, bei dem die Zugträger spiralförmig unter dem Winkel α in der Wandung des Rohlings angeordnet sind und durch die Schneideinheit von diesem Rohling mindestens eine Materialbahn derart abtrennbar ist, dass die Zugträger einen Winkel γ zur Längsachse der Materialbahn bilden.

Derartige Materialbahnen werden als Karkass- oder Gürtelmaterial bei der Reifenherstellung benötigt.

Aus der EP 0 972 762 9 A2 oder der EP 1 226 925 A1 sind Verfahren der genannten Art bekannt, bei der ein endlicher Rohmaterialstreifen auf einer Trommel oder mehreren Wickeldornen zu einem Rohling in Form eines endlichen Hohlkörpers aufgewickelt wird, wobei während des Wickelvorganges die aneinander stoßenden Ränder des Rohmaterialstreifens durch einen Verbindungsvorgang beispielsweise durch Kleben oder Schweißen fest miteinander verbunden werden. Auf diese Weise entsteht der Rohling als eine Art endlicher Schlauch oder Rohrabschnitt. Die Winkellage der Zugträger in Bezug auf die Längsachse in diesem Rohling ist dabei durch die Breite des Rohmaterialstreifens und den Durchmesser der Aufwickeleinheit bestimmt.

Nach Fertigstellung dieses Rohlings wird durch einen Schneidvorgang aus dem Rohling die Materialbahn geschnitten. Dabei wird beispielsweise der Rohling entgegengesetzt zur Aufwickeleinheit gegen ein feststehendes Schneidwerkzeug gedreht.

Die Breite und der Winkel der Zugträger zur Längsachse der dabei entstehenden Materialbahn sind vom Vorschub des Schneidwerkzeugs längs Längsachse des Rohlings und der relativen Rotationsgeschwindigkeiten von Schneidwerkzeug zum Rohling bestimmt.

Die genannten Verfahren sind jedoch nur dazu geeignet, um in diskontinuierlicher Weise endliche Abschnitte der gewünschten Materialbahn zu erzeugen.

In der WO 2005 06 59 26 ist eine Vorrichtung gezeigt, bei der eine Materialbahn der genannten Art aus einem Rohling geschnitten wird, der durch das kontinuierliche spiralige Aufwickeln einer mit Gummi beschichteten Anzahl von Cordfäden entsteht.

Die Abtrennung der Materialbahn erfolgt dabei durch einen gegenläufigen Schneidvorgang, d.h. die Schneidrichtung ist der Aufwickelrichtung des Rohmaterialstreifens entgegengesetzt. Der Rohling wird quasi in die Schneideinheit hineingedreht. Die Materialbahn läuft in gleicher Richtung von der Aufwickelvorrichtung ab, in der das Rohmaterial aufgewickelt wird. Durch dieses Verfahren sind dem Winkel γ zwischen Zugträgern und Längsrichtung der Materialbahn Grenzen gesetzt. Dieser kann nur Werte zwischen -α ≤ γ ≤ (90° -α) annehmen. Die beispielsweise für Karkassstreifen bei der Reifenherstellung benötigte Lage von 90° ist damit nicht erreichbar, da α immer größer ist als 0.

Der Erfindung liegt die Aufgabe zugrunde, ein Verfahren zu schaffen, das eine kontinuierliche Fertigung der eingangs geschilderten Materialbahnen auch mit einem Winkel γ der Festigkeitsträger zur Längsachse der Materialbahn von 90° ermöglicht.

Diese Aufgabe wird dadurch gelöst, dass das Abtrennen der Materialbahn vom Rohling in einem gleichläufigen Schneidvorgang erfolgt, bei dem die Schneidrichtung und Aufwickelrichtung des Rohmaterialstreifens gleich sind.

Dieses Verfahren hat den Vorteil, dass der Winkel γ zwischen Zugträgern und Längsrichtung der Materialbahn auch Werte von 90° annehmen kann, nämlich α ≤ γ ≤ -α. Der gleichläufige Schneidvorgang ist dadurch möglich, dass sich die Schneideinheit gegenüber dem Rohling mit höherer Geschwindigkeit bewegt.

In einer Weiterbildung der Erfindung weist das Verfahren mindestens folgende weitere Arbeitsschritte auf, nämlich
- spiralförmiges Aufwickeln eines zweiten oder weiterer Rohmaterialstreifens aus einem Basismaterial mit eingebetteten, parallel zur Längsachse des Rohmaterialstreifens ausgerichteten Zugträgern auf den auf der Aufwickeleinheit angeordneten geschlossenen rohrförmigen Rohling unter einem Winkel δ des zweiten oder unter Winkeln δ der weiteren Rohmaterialstreifens zur Längsachse der Aufwickeleinheit derart, dass die Ränder des zweiten Rohmaterialstreifens oder der weiteren Rohmaterialstreifen auf dem geschlossenen rohrförmigen Rohling spaltlos aneinander stoßen oder überlappen, wobei der oder die Winkel δ von dem Winkel α verschieden ist oder sind oder dem Winkel α gleich ist oder sind,
- festes Verbinden der aneinander stoßenden oder überlappenden Ränder des zweiten und/oder aller weiteren Rohmaterialstreifen miteinander durch eine Verbindungseinheit, so dass ein mehrlagiger geschlossener rohrförmiger Rohling entsteht, bei dem die Zugträger spiralförmig unter einem Winkel δ oder Winkeln δ in der Wandung des mehrlagigen Rohlings angeordnet sind,
- Abtrennen mindestens einer mehrlagigen Materialbahn durch eine Schneideinheit von dem mehrlagigen Rohling derart, dass die Zugträger in den Lagen der Materialbahn Winkel ε zur Längsachse der Materialbahn bilden, wobei die Winkel ε von dem Winkel γ abweichen oder dem Winkel γ gleich sind.

Dieses Verfahren hat den Vorteil, dass die abgetrennten Materialbahnen bereits mehrere Lagen mit ggf. sich kreuzenden Zugträgern aufweisen, was beispielsweise beim Wickeln von Reifenrohlingen einen oder mehrere Arbeitsgänge einspart.

Der Erfindung liegt weiterhin die Aufgabe zugrunde, eine Vorrichtung zu schaffen, die die Durchführung des erfindungsgemäßen Verfahrens ermöglicht.

Diese Aufgabe wird dadurch gelöst, dass die Schneideinheit koaxial zu dem Rohling angeordnet ist und mit diesem im Eingriff steht und zum Rohling eine Relativdrehzahl aufweist, wobei die Drehrichtung der Schneideinheit derart einstellbar ist, dass der Schneidvorgang mit der Aufwickelrichtung des Rohmaterialstreifens gleichgerichtet ist.

In einer Weiterbildung der Erfindung sind die Rohmaterialstreifen in jeweils einer rotatorischen Bewegung spiralförmig um die nicht drehende Aufwickeleinheit oder den geschlossenen rohrförmigen Hohlkörper auf der Aufwickeleinheit aufwickelbar.

Diese Anordnung hat den Vorteil, dass die Schneideinheit mit geringerer Drehzahl rotieren oder feststehen kann und damit das Aufrollen der Materialbahn vereinfacht ist. Durch Hintereinanderschaltung lassen sich mehrere Rohmaterialstreifen übereinander wickeln, wobei durch das separate Aufwickeln pro Rohmaterialstreifen auch unterschiedliche Aufwickelwinkel realisierbar sind, da die rotatorische Bewegung pro Rohmaterialstreifen unterschiedlich schnell erfolgen kann.

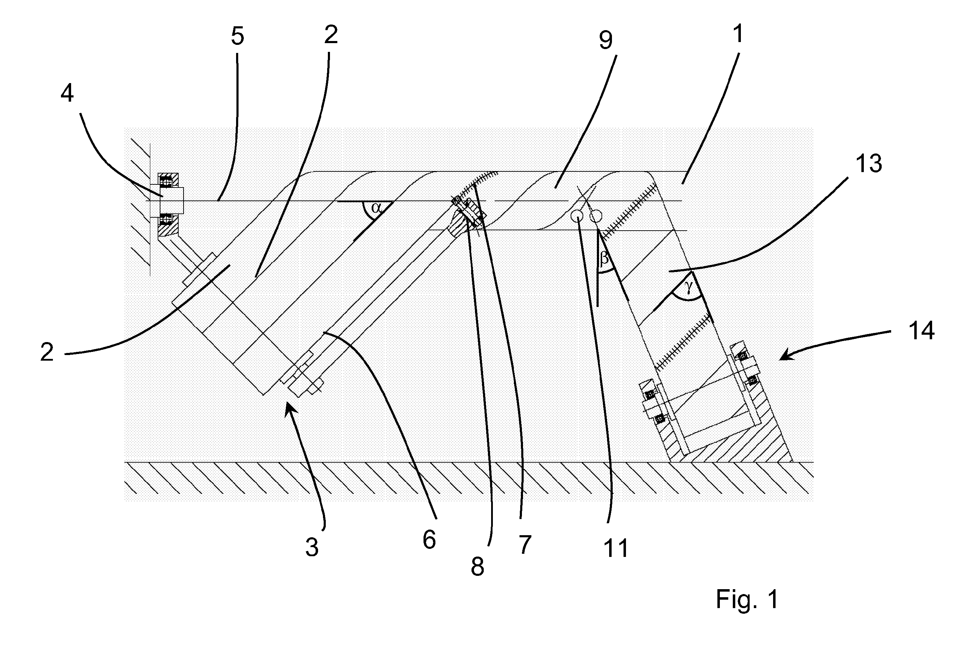

Anhand der Zeichnung wird nachstehend ein Beispiel der Erfindung näher erläutert.

In der einzigen Figur ist eine erfindungsgemäße Vorrichtung im Prinzip dargestellt. Die Vorrichtung weist eine Aufwickeltrommel 1 auf, auf der ein Rohmaterialstreifen 2 spiralförmig aufgewickelt wird. Der Rohmaterialstreifen 2 wird dabei von einer Abwickelstation 3 abgerollt. Die Abwickelstation 3 weist eine Drehachse 4 auf, die konzentrisch zur Hauptachse 5 der Aufwickeltrommel 1 angeordnet ist. Die Abwickelstation rotiert um die Drehachse 4, wobei sich der Rohmaterialstreifen 2 auf der Aufwickeltrommel 1 aufwickelt. Die Aufwickeltrommel 1 rotiert um die Hauptachse 5, wobei die Drehrichtung von Abwickelstation 3 und Aufwickeltrommel 1 gleich sind. Die Drehzahl der Abwickelstation 3 muss dabei größer als die Drehzahl der Aufwickeltrommel 1 sein. Der Rohmaterialstreifen 2 wird unter einem Winkel α auf die Aufwickeltrommel 1 aufgewickelt. Dabei stößt ein erster Rand 6 des Rohmaterialstreifens 2 gegen den zweiten Rand des Rohmaterialstreifens 2, so dass kein Spalt zwischen den Rändern 6 und 7 verbleibt. Einer ebenfalls in Drehrichtung von Abwickelstation 3 und Aufwickeltrommel 1 rotierende Verbindungsstation 8 verbindet die Ränder 6 und 7, so dass aus dem Rohmaterialstreifen 2 auf der Aufwickeltrommel 1 ein rohrförmiger Rohling 9 entsteht. Der Rohling 9 wird durch nicht gezeigte Rollen auf der Aufwickeltrommel 1 von der Verbindungsstation 8 weggefördert. Auf der der Abwickelstation 3 abgewandten Seite der Aufwickeltrommel 1 trifft der Rohling 9 auf eine feststehende Schneideinheit 11. Da der Rohling 9 ebenfalls in Richtung der Aufwickeltrommel 1 rotiert, wird durch die Schneideinheit 11 eine Materialbahn 13 abgetrennt und auf eine Aufrollstation 14 aufgerollt.

Der Rohmaterialstreifen 2 weist Zugträger 15 auf, die in Längsrichtung des Rohmaterialstreifens 2 verlaufen. Die Zugträger 15 weisen gegenüber der Hauptachse 5 der Aufwickeltrommel 1 daher ebenfalls den Winkel α auf. Durch die Schneideinheit 11 wird die Materialbahn 13 und einem Winkel β zur Hauptachse 5 abgetrennt. Daher ergibt sich der Winkel γ der Zugträger 15 zur Längsrichtung der Materialbahn 13 zur γ = 180° -α- β.

Mit dem erfindungsgemäßen Verfahren ist daher eine kontinuierliche Fertigung der Materialbahn mit einem Winkel γ der Zugträger gegen die Längsrichtung der Materialbahn von 90° möglich, ohne dass die Drehrichtung der Vorrichtung geändert werden muss. Die erfindungsgemäße Vorrichtung ermöglicht dieses Verfahren auf einfache Weise, so dass mit der Erfindung eine erhebliche Produktivitätssteigerung durch die kontinuierliche Fertigung der Materialbahn ermöglicht wird.

### Bezugszeichenliste

### (Teil der Beschreibung)

- 1: Aufwickeltrommel
- 2: Rohmaterialstreifen
- 3: Abwickelstation
- 4: Drehachse der Abwickelstation 3
- 5: Hauptachse der Aufwickeltrommel 1
- 6: erster Rand des Rohmaterialstreifens 2
- 7: zweiter Rand des Rohmaterialstreifens 2
- 8: Verbindungsstation
- 9: Rohling
- 11: Schneideinheit
- 13: Materialbahn
- 14: Aufrollstation
- 15: Zugträger des Rohmaterialstreifens 2 / der Materialbahn 15

## Patentansprüche

1. Verfahren zur Herstellung einer Materialbahn (13) aus einem Basismaterial mit in das Basismaterial eingebetteten Zugträgern (15), wobei die Zugträger (15) zur Längsachse der Materialbahn (13) einen Winkel γ bilden, der von Null verschieden ist, welches mindestens folgende Verfahrensschritte aufweist, nämlich
- spiralförmiges Aufwickeln mindestens eines Rohmaterialstreifens (2) aus einem Basismaterial mit eingebetteten, parallel zur Längsachse des Rohmaterialstreifens (2) ausgerichteten Zugträgern (15) auf einer Aufwickeleinheit (1) unter einem Winkel α des Rohmaterialstreifens (2) zur Längsachse der Aufwickeleinheit (1) zu einem Hohlkörper derart, dass die Ränder (6, 7) des Rohmaterialstreifens (2) auf der Aufwickeleinheit (1) spaltlos aneinander stoßen oder überlappen,
- festes Verbinden der aneinander stoßenden oder überlappenden Ränder (6, 7) miteinander durch eine Verbindungseinheit (8), so dass ein geschlossener rohrförmiger Rohling (9) entsteht, bei dem die Zugträger (15) spiralförmig unter dem Winkel α in der Wandung des Rohlings (9) angeordnet sind,
- Abtrennen einer Materialbahn (13) durch eine Schneideinheit (11) vom Rohling (9) derart, dass die Zugträger (15) einen Winkel γ zur Längsachse der Materialbahn (13) bilden,
**dadurch gekennzeichnet, dass** das Abtrennen der Materialbahn (13) vom Rohling (9) in einem gleichläufigen Schneidvorgang erfolgt, bei dem die Schneidrichtung und Aufwickelrichtung des Rohmaterialstreifens (2) gleich sind.

2. Verfahren nach Anspruch 1, **dadurch gekennzeichnet, dass** das Verfahren mindestens folgende weitere Arbeitsschritte auf, nämlich
- spiralförmiges Aufwickeln eines zweiten oder weiterer Rohmaterialstreifens (2) aus einem Basismaterial mit eingebetteten, parallel zur Längsachse des Rohmaterialstreifens (2) ausgerichteten Zugträgern (15) auf den auf der Aufwickeleinheit (1) angeordneten geschlossenen rohrförmigen Rohling (9) unter einem Winkel δ des zweiten oder unter Winkeln δ der weiteren Rohmaterialstreifens zur Längsachse der Aufwickeleinheit (2) derart, dass die Ränder des zweiten Rohmaterialstreifens oder der weiteren Rohmaterialstreifen auf dem geschlossenen rohrförmigen Rohling (9) spaltlos aneinander stoßen oder überlappen, wobei der oder die Winkel δ von dem Winkel α verschieden ist oder sind oder dem Winkel α gleich ist oder sind,
- festes Verbinden der aneinander stoßenden oder überlappenden Ränder des zweiten und/oder aller weiteren Rohmaterialstreifen miteinander durch eine Verbindungseinheit (8), so dass ein mehrlagiger geschlossener rohrförmiger Rohling entsteht, bei dem die Zugträger (15) spiralförmig unter einem Winkel δ oder Winkeln δ in der Wandung des mehrlagigen Rohlings angeordnet sind,
- Abtrennen mindestens einer mehrlagigen Materialbahn (13) durch eine Schneideinheit von dem mehrlagigen Rohling derart, dass die Zugträger in den Lagen der Materialbahn Winkel ε zur Längsachse der Materialbahn bilden, wobei die Winkel ε von dem Winkel γ abweichen oder dem Winkel γ gleich sind.

3. Vorrichtung zur Durchführung des Verfahrens zur Herstellung einer Materialbahn (13) mit einer Aufwickeleinheit (1), einer Verbindungseinheit (8) und einer Schneideinheit (11), wobei mindestens ein Rohmaterialstreifen (2) aus einem Basismaterial mit eingebetteten, parallel zur Längsachse des Rohmaterialstreifens (2) ausgerichteten Zugträgem (15) auf einer Aufwickeleinheit (1) unter einem Winkel α des Rohmaterialstreifens (2) zur Längsachse der Aufwickeleinheit (1) derart aufwickelbar ist, dass die Ränder (6, 7) des Rohmaterialstreifens (2) auf der Aufwickeleinheit (1) spaltlos aneinander stoßen oder überlappen und der Rohmaterialstreifen (2) durch die Verbindungseinheit (8) zu einem als geschlossener rohrförmiger Hohlkörper ausgebildeten Rohling (9) verbindbar ist, bei dem die Zugträger (15) spiralförmig unter dem Winkel α in der Wandung des Rohlings (9) angeordnet sind und durch die Schneideinheit (11) von diesem Rohling (9) mindestens eine Materialbahn (13) derart abtrennbar ist, dass die Zugträger (15) einen Winkel γ zur Längsachse der Materialbahn (13) bilden, **dadurch gekennzeichnet, dass** die Schneideinheit (11) koaxial zu dem Rohling (9) angeordnet ist und mit diesem im Eingriff steht und zum Rohling (9) eine Relativdrehzahl aufweist, wobei die Drehrichtung der Schneideinheit (11) derart einstellbar ist, dass der Schneidvorgang mit der Aufwickelrichtung des Rohmaterialstreifens (2) gleichgerichtet ist.

4. Vorrichtung nach Anspruch 2, **dadurch gekennzeichnet, dass** die Rohmaterialstreifen (2) in einer rotatorischen Bewegung spiralförmig um die nicht drehende Aufwickeleinheit (1) aufwickelbar sind.
